# EUROPEAN PATENT APPLICATION

(11) **EP 2 743 144 A2**
(43) Date of publication of application: **18.06.2014**
(21) Application number: 13196783.8
(22) Date of filing: 12.12.2013
(51) Int. Cl.: B60R 21/015, B60R 21/34

(54) **GPS data for improving pedestrian protection**

(30) Priority: 13.12.2012 US 201213713392
(71) Applicant: Continental Automotive Systems US, Inc., Auburn Hills, MI 48326 (US)
(72) Inventor: Agnew, David, Clarkston, MI 48348 (US); Headley, Philip, Brighton, MI 48116 (US)
(74) Representative: Hassa, Oliver Michael

(57) **Abstract**

A pedestrian protection system (12) from a vehicle (10) utilizes GPS data to reduce the number of false positive detections for impacting an object (28) determined to be a pedestrian. The GPS data is used to focus on an area of increased and/or decreased pedestrian presence to alter a reaction threshold (RT) for the vehicle (10). Additionally, the GPS data can be used for more accurate analysis of the likelihood of an impact.

## Description

### TECHNICAL FIELD

The present disclosure relates to automotive vehicles, and more particularly to safety systems for automotive vehicles.

### BACKGROUND

An automotive vehicle may include a pedestrian protection system to warn the vehicle operator and adapt the vehicle responses to avoid impact and to minimize pedestrian injuries. The pedestrian protection system utilizes sensors and cameras to detect objects in the vehicle path. The pedestrian protection system analyzes the data to determine if the detected objects are pedestrians and warns the vehicle operator of a likely pedestrian impact. By alerting the vehicle operator of an upcoming pedestrian impact the vehicle operator may take action to avoid the pedestrian.

The pedestrian protection system may further initiate vehicle actions to avoid impact with a pedestrian or at least to mitigate the injuries to the pedestrian. The pedestrian protection system may even take autonomous action to avoid impact and/or mitigate injuries, such as application of the vehicle brakes.

However, the known pedestrian protection systems may sometimes provide a false pedestrian detection. Thus the vehicle may react to a false detection and unnecessarily alter the vehicle behavior. Limiting false detection by the system would improve system performance and limit unnecessary reactions by the vehicle that may be unwanted by the driver.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

A method of controlling a vehicle to increase pedestrian protection comprises monitoring data from a plurality of sensors with an electronic control unit. The ECU determines a confidence factor that a detected object proximate to the vehicle is a pedestrian and analyzes GPS data to determine if the vehicle is in one of an area of increased pedestrian presence, decreased pedestrian presence and indeterminate pedestrian presence. A reaction threshold is selected based upon the analysis of the GPS data and the confidence factor is compared to the reaction threshold.

Another method of controlling a vehicle to increase pedestrian protection comprises monitoring data from a plurality of sensors with an ECU and determining a confidence factor that a detected object proximate to the vehicle is a pedestrian. The confidence factor is compared to a reaction threshold. The ECU also determines if an impact with the detected object is likely to occur and compares GPS data to the object position and the vehicle position to alter the likelihood that an impact will occur.

A pedestrian protection system for a vehicle comprises a plurality of sensors to monitor an area proximate to the vehicle and an ECU connected to the plurality of sensors to determine if an object detected by the sensors is a pedestrian. The ECU is configured with instructions for determining a confidence factor that a detected object proximate to the vehicle is a pedestrian, analyzing GPS data to determine if the vehicle is in one of an area of increased pedestrian presence, decreased pedestrian presence and indeterminate pedestrian presence selecting a reaction threshold based upon the analysis of the GPS data and comparing the confidence factor to the reaction threshold.

Further areas of applicability of the present disclosure will become apparent from the detailed description provided hereinafter. It should be understood that the detailed description and specific examples, while indicating the preferred embodiment of the disclosure, are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a schematic side view of a vehicle having a pedestrian protection system of the present invention;

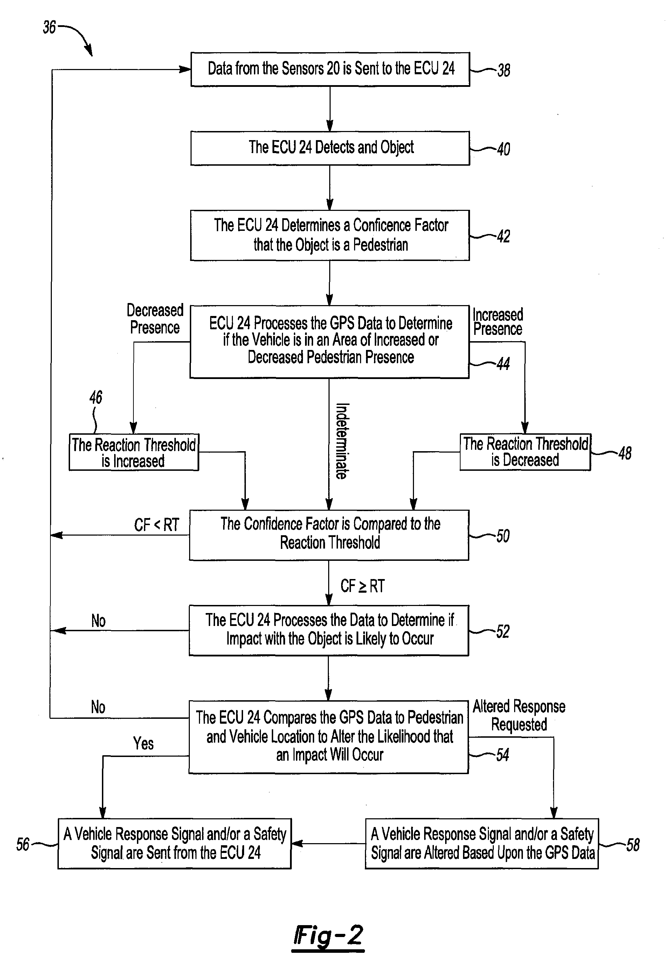

FIG. 2 is a schematic diagram of an exemplary implementation of the pedestrian protection system for the vehicle of Figure 1.

### DETAILED DESCRIPTION

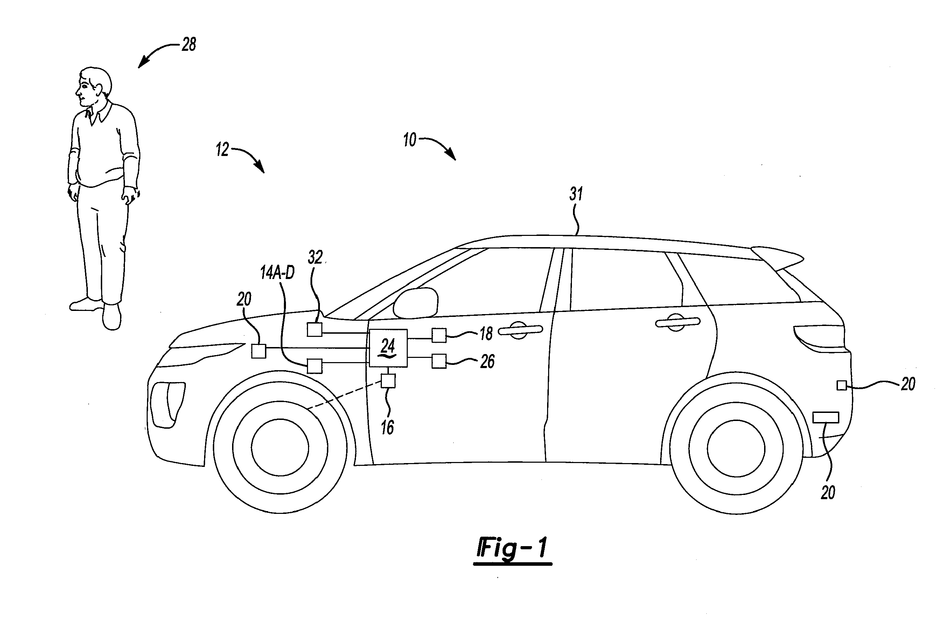

The following description is merely exemplary in nature and is in no way intended to limit the disclosure, its application, or uses. For purposes of clarity, the same reference numbers will be used in the drawings to identify similar elements. Figure 1 is a schematic illustration of a vehicle 10 having a pedestrian protection system 12. The pedestrian protection system 12 preferably incorporates other existing vehicle 10 systems such as a forward collision alert system 14A or a back-up assist system 14B for the vehicle 10 and may be utilize the same sensors and components, as described below. Throughout the applications the relative directions of forward and rear are in reference to the direction which an operator for the vehicle 10 would primarily be facing when operating the vehicle 10.

The pedestrian protection system 12 may be connected to other systems for the vehicle 10 including the forward collision alert system 14A, a back-up assist system 14B, a supplement restraint system 14C, a driver warning 14D, a brake system 16, and a steering system 18. Other systems, not shown, that provide information that may be utilized by the pedestrian protection system 12 may also be connected. Likewise, other systems, not shown, that may be used to control the vehicle 10 may also be connected to receive signals from the pedestrian protection system 12.

The pedestrian protection system 12 includes a plurality of sensors 20. The sensor(s) 20 may be any of a proximity, lidar, camera, etc. The pedestrian protection system 12 includes a module having an electronic control unit (ECU) 24. The ECU 24 receives input from the various vehicle systems 14A-14D, 16, 18 and sensors 20. As mentioned above, the sensors 20 providing input data to the ECU 24 may also be part of already existing systems 14A-14D, 16, 18 in the vehicle 10. The ECU 24 monitors the vehicle 10 information which includes monitoring a GPS system 26 and may include other systems and sensors such as, weather sensors, wheel speed sensors, a speedometer, a accelerometer, a steering sensor and a brake sensor. One skilled in the art would be able to determine which other sensors and systems may provide useful information to the pedestrian protection system 12.

The sensors 20 detect an object 28. Based upon the data input from the sensors 20 and the other various systems and sensors mentioned above the ECU 24 calculates an confidence factor (CF) that the object 28 is a pedestrian. If the confidence factor (CF) is greater than a predetermined reaction threshold (RT) the pedestrian protection system 12 enacts avoidance measures. The pedestrian protection system 12 may use kinematic data to compute the potential impact and send one or more safety and response signals to the various vehicle systems 14A-D, 16 and 18 to initiate an action that will mitigate and/or prevent the pending impact. These actions may include, sounding a horn, flashing a rear facing light, pre-tensioning the seat belts, pre-charging the brakes, deploying a bumper to an extended collision position, lowering a body height of the vehicle 10, and braking or steering the vehicle 10, etc.

The ECU 24 monitors data from the GPS 26 to determine if the vehicle 10 is in an area of increased pedestrian presence, e.g. close to points of interest such as theaters, arena, school zones, airports, etc. If the ECU 24 determines the vehicle 10 is in an area of increased pedestrian presence the ECU can lower the required reaction threshold (RT) that is required for a reaction from the vehicle 10. Thus, the vehicle 10 will react at a lower confidence factor (CF) in areas of increased pedestrian presence. Conversely, in areas of decreased pedestrian presence the required reaction threshold (RT) may be increased. The system 12 will require a higher confidence factor (CF) before changing actions of the vehicle 10. For example, on an expressway where pedestrians are not typically found and unwarranted braking is highly noticeable. Of course, the pedestrian protection system 12 will still react if the confidence factor (CF) that an object 28 is a pedestrian exceeds the increased reaction threshold (RT). Thus, the pedestrian protection system 12 still responds to protect pedestrians and has a decreased number of false detections resulting in unwarranted responses by the vehicle 10.

Alternatively, rather than increasing or decreasing the reaction threshold (RT) when in areas of low or high pedestrian presence the pedestrian protection system 12 may use the GPS data to increase or decrease the confidence factor (CF) an according amount.

Another method of using the GPS data with the pedestrian protection system 12 may be to analyze the likelihood of the pedestrian crossing the vehicle path 10. For example, the GPS data may be used to alter the ECU 24 decision on whether an impact is likely. For example, if the ECU 24 determines that the object 28 is likely a pedestrian, but that the GPS data indicates that the pedestrian is in a walkway, or the vehicle will be steering around a corner than the likelihood of impact may be decreased. The vehicle 10 reaction may be altered if the likelihood of impact is decreased based upon the pedestrian location and the GPS data. For example, the pedestrian protection system 12 may wait longer to brake the vehicle 10. If the pedestrian protection system 12 still determines impact is likely the vehicle 10 may apply the brakes at a higher rate. Thus, early false detections and unnecessary vehicle 10 responses will be avoided while providing protection to pedestrians.

Figure 3 illustrates one embodiment of a method 36 for operating the pedestrian protection system 12. With reference to Figure 1, the method 36 for operating the pedestrian protection system 12 is described below. Data is sent from various systems and sensors 20 for the vehicle 10 to the ECU module 24, step 38. The ECU 24 monitors and processes the various data to determine if an object 28 is detected, step 40. The ECU 24 analyzes the various data, i.e. image analysis, to calculate a confidence factor (CF) that the object 28 detected is a pedestrian, step 42. Using the GPS 26 data the ECU 24 determines if the vehicle 10 is located in an area of increased pedestrian presence, decreased pedestrian presence, or an indeterminate area. If the vehicle 10 is in an area of decreased pedestrian presence the ECU 24 increases the reaction threshold (RT) for the pedestrian protection system 12, step 46. If the vehicle 10 is in an area of increased pedestrian presence the ECU 24 decreases the reaction threshold (RT) for the pedestrian protection system 12, step 48. If the vehicle 10 is in an indeterminate area of pedestrian presence the ECU 24 uses the pre-selected reaction threshold (RT) for the pedestrian protection system 12.

The confidence factor (CF) is compared to the reaction threshold(RT), step 50. If the confidence factor (CF) is below the reaction threshold (RT) no reaction is necessary. The ECU 24 continues to monitor the data from the sensors 20 for pedestrian presence, step 38. If the confidence factor (CF) is above the reaction threshold (RT) action may be necessary. The ECU 24 determines is an impact with the object 28 is likely to occur, step 52. This information is based upon the position of the object 28 and the position and direction of travel for the vehicle 10.

If an impact is considered likely the ECU 24 may further compare the position of the object/pedestrian 28 with the data from the GPS 26. The GPS 26 data may be used to alter the likelihood of an impact with the object/pedestrian 28. For example, the GPS 26 data may indicate that the object/pedestrian 28 appears to be in the oncoming path of the vehicle 10, but the road curves and the vehicle 10 will shortly be changing directions. In such an instance immediate braking of the vehicle 10 may not be necessary and a warning to the driver may be sufficient. Additional data such as the time of day, time of year, weather, etc. can also be used.

Based upon the ECU 24 analysis of the GPS data the ECU will determine that impact is actually not likely, and no reaction by the pedestrian protection system 12 is required. The ECU 24 continues to monitor the sensor data, step 38. Alternately the ECU 24 may determine that the standard response by the system 12 is preferable under the circumstances, step 56. Finally, the ECU 24 may alter the vehicle 10 response by increasing or decreasing the reaction of the vehicle 10 based upon whether the GPS 26 data makes impact with the object/pedestrian 28 more or less likely, step 58.

At least one of a first safety signal and a first vehicle response signal are sent from the ECU 24, step 54. The first safety signal initiates at least one warning or device to prepare and protect the occupants of the vehicle 10 and the first vehicle response signal initiates at least one response to proactively prepare the vehicle 10 from a possible impact. A driver warning signal may be an auditory signal, a visual signal, such as activating a warning lamp, a haptic signal, such as a steering wheel vibration, or a combination of these signals. The driver warning signal may be provided to the vehicle operator with sufficient time to allow the driver to preemptively adjust the operation of the vehicle 10 in order to avoid the impact, such as by braking or steering the vehicle 10 toward another area.

The safety device may be one of a seat belt restraint system, an airbag deployment system, a head restraint system, or other system designed to protect an occupant within passenger compartment. Pre-activating the safety device with the first safety signal would therefore include, pre-tensioning seat belts, pre-charging an airbag restraint, and pre-charging a head support system.

In addition the pedestrian protection system 12 may also send a response signal to at least one vehicle 10 system to prepare the vehicle 10 for an impact. The first response signal may include, pre-charging the brakes, deploying a bumper to an extended collision position, lowering a body height of the vehicle 10, and braking or steering the vehicle 10. If the ECU 24 for the pedestrian protection system 12 detects that further action is required further safety and/or a response signals may also be sent, shown at 58.

The response signal initiates at least one response that changes the state of the vehicle 10 to prepare the vehicle 10 for or avoid a possible impact and has the primary purpose to reduce or eliminate injury to the pedestrian. However, ideally the vehicle 10 response also acts to protect the passengers of the vehicle 10 as well.

Based on the current information the system 12 may indicates a response is not required by the vehicle 10. However, the system 12 continues monitoring the data from the ECU 24, step 38. Thus, changing conditions of the vehicle 10, confidence factor (CF) or other information may allow for the system 12 to provide a different reaction as the vehicle 10 is traveling and the data used by the ECU 24 is changing.

While the best modes for carrying out the invention have been described in detail the true scope of the disclosure should not be so limited, since those familiar with the art to which this invention relates will recognize various alternative designs and embodiments for practicing the invention within the scope of the appended claims.

### FURTHER EMBODIMENTS

1. A method of controlling a vehicle to increase pedestrian protection comprising:
   monitoring data from a plurality of sensors with an electronic control unit;
   determining a confidence factor that a detected object proximate to the vehicle is a pedestrian;
   analyzing GPS data to determine if the vehicle is in one of an area of increased pedestrian presence, decreased pedestrian presence and indeterminate pedestrian presence;
   selecting a reaction threshold based upon the analysis of the GPS data; and
   comparing the confidence factor to the reaction threshold.
2. The method of embodiment 1, further comprising determining if an impact with the detected object is likely to occur.
3. The method of embodiment 2, further comprising sending at least one of a safety signal and a response signal based upon the determining if an impact with the detected object is likely to occur.
4. The method of embodiment 3, wherein the sending the safety signal to the at least one vehicle system includes sending a warning signal including one of an auditory signal, a visual signal, and a haptic signal.
5. The method of embodiment 3, wherein the sending the response signal includes at least one of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object,.
6. The method of embodiment 2, further comprising comparing the GPS data to the object position and the vehicle position to alter the likelihood that an impact will occur.
7. The method of embodiment 6, further comprising providing one of: no vehicle response based upon the likelihood that an impact will occur, providing a standard vehicle response based upon the likelihood that an impact will occur, and providing an altered vehicle response based upon the likelihood that an impact will occur.
8. A method of controlling a vehicle to increase pedestrian protection comprising:
   monitoring data from a plurality of sensors with an electronic control unit;
   determining a confidence factor that a detected object proximate to the vehicle is a pedestrian;
   comparing the confidence factor to a reaction threshold.
   determining if an impact with the detected object is likely to occur; and
   comparing the GPS data to the object position and the vehicle position to alter the likelihood that an impact will occur.
9. The method of embodiment 8, further comprising
   analyzing GPS data to determine if the vehicle is in one of an area of increased pedestrian presence, decreased pedestrian presence and indeterminate pedestrian presence;
   selecting a reaction threshold based upon the analysis of the GPS data prior to comparing the confidence fator to the reaction threshold;
10. The method of embodiment 8, further comprising sending at least one of a safety signal and a response signal based upon the determining if an impact with the detected object is likely to occur.
11. The method of embodiment 10, wherein the sending the safety signal to the at least one vehicle system includes sending a warning signal including one of an auditory signal, a visual signal, and a haptic signal.
12. The method of embodiment 10, wherein the sending the response signal includes at least one of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object,.
13. The method of embodiment 8, further comprising providing one of:
   no vehicle response based upon the likelihood that an impact will occur,
   providing a standard vehicle response based upon the likelihood that an impact will occur, and providing an altered vehicle response based upon the likelihood that an impact will occur.
14. A pedestrian protection system for a vehicle comprising:
   a plurality of sensors to monitor an area proximate to the vehicle;
   an ECU connected to the plurality of sensors to determine if an object detected by the sensors is a pedestrian, wherein the electronic control unit is configured with instructions for;
   determining a confidence factor that a detected object proximate to the vehicle is a pedestrian;
      analyzing GPS data to determine if the vehicle is in one of an area of increased pedestrian presence, decreased pedestrian presence and indeterminate pedestrian presence;
      selecting a reaction threshold based upon the analysis of the GPS data; and
      comparing the confidence factor to the reaction threshold.
15. The pedestrian protection system of embodiment 14, wherein the electronic control unit is further configured with instructions for determining if an impact with the detected object is likely to occur.
16. The pedestrian protection system of embodiment 15, wherein the electronic control unit is further configured with instructions for sending at least one of a safety signal and a response signal based upon the determining if an impact with the detected object is likely to occur.
17. The pedestrian protection system of embodiment 15, wherein the sending the safety signal to the at least one vehicle system includes sending a warning signal including one of an auditory signal, a visual signal, and a haptic signal.
18. The pedestrian protection system of embodiment 15, wherein the sending the response signal includes at least one of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object,.
19. The pedestrian protection system of embodiment 14, wherein the electronic control unit is further configured with instructions for comparing the GPS data to the object position and the vehicle position to alter the likelihood that an impact will occur.
20. The pedestrian protection system of embodiment 19, wherein the electronic control unit is further configured with instructions for providing one of:
   no vehicle response based upon the likelihood that an impact will occur,
   providing a standard vehicle response based upon the likelihood that an impact will occur, and providing an altered vehicle response based upon the likelihood that an impact will occur.

## Claims

1. A method of controlling a vehicle to increase pedestrian protection comprising:
monitoring data from a plurality of sensors with an electronic control unit;
determining a confidence factor that a detected object proximate to the vehicle is a pedestrian;
analyzing GPS data to determine if the vehicle is in one of an area of increased pedestrian presence, decreased pedestrian presence and indeterminate pedestrian presence;
selecting a reaction threshold based upon the analysis of the GPS data; and
comparing the confidence factor to the reaction threshold.

2. The method of claim 1, further comprising:
determining if an impact with the detected object is likely to occur and/or sending at least one of a safety signal and a response signal based upon the determining if an impact with the detected object is likely to occur and/or comparing the GPS data to the object position and the vehicle position to alter the likelihood that an impact will occur.

3. The method of claim 2, wherein the sending the safety signal to the at least one vehicle system includes sending a warning signal including one of an auditory signal, a visual signal, and a haptic signal and/or wherein the sending the response signal includes at least one of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object,.

4. The method according to any of the claims 1 -3, further comprising providing one of: no vehicle response based upon the likelihood that an impact will occur, providing a standard vehicle response based upon the likelihood that an impact will occur, and providing an altered vehicle response based upon the likelihood that an impact will occur.

5. A method of controlling a vehicle to increase pedestrian protection comprising:
monitoring data from a plurality of sensors with an electronic control unit;
determining a confidence factor that a detected object proximate to the vehicle is a pedestrian;
comparing the confidence factor to a reaction threshold.
determining if an impact with the detected object is likely to occur; and
comparing the GPS data to the object position and the vehicle position to alter the likelihood that an impact will occur.

6. The method of claim 5, further comprising
analyzing GPS data to determine if the vehicle is in one of an area of increased pedestrian presence, decreased pedestrian presence and indeterminate pedestrian presence;
selecting a reaction threshold based upon the analysis of the GPS data prior to comparing the confidence fator to the reaction threshold;

7. The method of claim 5 or 6, further comprising sending at least one of a safety signal and a response signal based upon the determining if an impact with the detected object is likely to occur and/or providing one of: no vehicle response based upon the likelihood that an impact will occur, providing a standard vehicle response based upon the likelihood that an impact will occur, and providing an altered vehicle response based upon the likelihood that an impact will occur.

8. The method of claim 7, wherein the sending the safety signal to the at least one vehicle system includes sending a warning signal including one of an auditory signal, a visual signal, and a haptic signal and/or wherein the sending the response signal includes at least one of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object.

9. A pedestrian protection system for a vehicle comprising:
a plurality of sensors to monitor an area proximate to the vehicle;
an ECU connected to the plurality of sensors to determine if an object detected by the sensors is a pedestrian, wherein the electronic control unit is configured with instructions for;
determining a confidence factor that a detected object proximate to the vehicle is a pedestrian;
analyzing GPS data to determine if the vehicle is in one of an area of increased pedestrian presence, decreased pedestrian presence and indeterminate pedestrian presence;
selecting a reaction threshold based upon the analysis of the GPS data; and
comparing the confidence factor to the reaction threshold.

10. The pedestrian protection system of claim 9, wherein the electronic control unit is further configured with instructions for determining if an impact with the detected object is likely to occur.

11. The pedestrian protection system of claim 9 or 10, wherein the electronic control unit is further configured with instructions for sending at least one of a safety signal and a response signal based upon the determining if an impact with the detected object is likely to occur.

12. The pedestrian protection system according to any of the preceding system-based claims, wherein the sending the safety signal to the at least one vehicle system includes sending a warning signal including one of an auditory signal, a visual signal, and a haptic signal.

13. The pedestrian protection system according to any of the preceding system-based claims, wherein the sending the response signal includes at least one of; pre-tensioning seat belts, pre-charging an airbag restraint, pre-charging a head support system, pre-charging the brakes, deploying a bumper to an extended collision position, lowering a vehicle bumper braking the vehicle and steering the vehicle to avoid the detected object,.

14. The pedestrian protection system according to any of the preceding system-based claims, wherein the electronic control unit is further configured with instructions for comparing the GPS data to the object position and the vehicle position to alter the likelihood that an impact will occur.

15. The pedestrian protection system according to any of the preceding system-based claims, wherein the electronic control unit is further configured with instructions for providing one of: no vehicle response based upon the likelihood that an impact will occur, providing a standard vehicle response based upon the likelihood that an impact will occur, and providing an altered vehicle response based upon the likelihood that an impact will occur.
